# FASCICULE DE BREVET EUROPEEN

(11) **EP 2 219 941 B1**
(45) Date de publication et mention de la délivrance du brevet: **08.08.2012**
(21) Numéro de dépôt: 08872099.0
(22) Date de dépôt: 14.11.2008
(51) Int. Cl.: B64C 1/12, B64C 1/06, B64C 1/14

(54) **DISPOSITIF DE LIAISON ENTRE UNE PIÈCE DE STRUCTURE INTERNE D'UN AÉRONEF ET LE FUSELAGE DE CELUI-CI**
VERBINDUNGSVORRICHTUNG ZUR VERBINDUNG EINER FLUGZEUGINNENSTRUKTURKOMPONENTE MIT DEM RUMPF DES BETREFFENDEN FLUGZEUGS
INTERCONNECTION DEVICE CONNECTING AN AIRCRAFT INTERNAL STRUCTURE COMPONENT TO THE FUSELAGE OF THIS AIRCRAFT

(30) Priorité: 16.11.2007 FR 0759126
(43) Date de publication de la demande: 25.08.2010
(73) Titulaire: AIRBUS OPERATIONS, 31060 Toulouse (FR)
(72) Inventeur: DEPEIGE, Alain, F-31170 Tournefeuille (FR)
(74) Mandataire: Petit, Maxime
(86) Numéro de dépôt international: PCT/FR2008/001605
(87) Numéro de publication internationale: WO 2009/098374

(56) Documents cités:
- EP-A- 0 009 654
- EP-A- 1 813 527
- WO-A-2007/107861
- US-A- 2 665 459
- US-A- 4 593 870
- US-A1- 2004 040 252
- US-A1- 2004 231 937

## Description

L'invention est relative à un dispositif de liaison entre une pièce de structure interne d'un aéronef et une peau de fuselage de l'aéronef. On trouve un exemple de l'art antérieur dans le document US 2665459.

Les fuselages d'aéronefs sont généralement formés d'une peau de fuselage renforcée par des pièces de structures telles que des raidisseurs longitudinaux (lisses) et transversaux (cadres). Les raidisseurs longitudinaux sont liés à la peau par différentes techniques d'assemblage : soudage, rivetage...

Les raidisseurs transversaux sont, quant à eux, liés à la peau par l'intermédiaire de clips.

Lorsque les aéronefs sont au sol, ils peuvent subir des dommages en provenance de leur environnement externe.

Ainsi, par exemple, les véhicules de piste qui gravitent autour des aéronefs, tels que les camions de chargement du commissariat de bord ou les transbordeurs de palettes, peuvent causer des chocs aux fuselages des aéronefs.

Il en est de même pour les installations aéroportuaires telles que les passerelles d'embarquement et de débarquement.

La plupart des chocs sont causés dans l'environnement périphérique proche des portes de cabine, généralement dans une zone périphérique du fuselage d'environ trois mètres autour des portes.

Lorsque la peau du fuselage des aéronefs est essentiellement métallique (alliage d'aluminium qui est généralement ductile), les chocs extérieurs subis par la peau du fuselage laissent des traces qui peuvent prendre l'apparence d'enfoncements locaux.

L'apparition de ces défauts visibles de l'extérieur impose de procéder à des inspections visuelles poussées de l'extérieur et de l'intérieur en enlevant les habillages et l'isolation interne.

Alternativement, on peut procéder à des opérations de contrôle non destructif, comme la recherche de criques en utilisant la méthode dite des courants de Foucault, afin de vérifier si les chocs n'ont pas provoqué d'autres dommages non visibles à l'oeil nu.

Lorsque la peau du fuselage des aéronefs est réalisée en matériaux composites, tels que des plastiques renforcés par des fibres de carbone, les chocs subis par la peau ne laissent pas nécessairement de traces extérieures.

Cependant, les chocs peuvent donner naissance à des délaminages entre les différentes couches du revêtement composite constituant la peau. Les couches sont ainsi séparées, ce qui réduit la résistance à la compression et au cisaillement de la peau.

Ce phénomène peut même provoquer une rupture des pièces de structure assujetties à la peau (cadres et lisses par exemple).

Le brevet FR 2 666 895 décrit une méthode qui permet de mémoriser et de détecter un choc subi par une pièce en matériau composite à base de carbone.

Bien qu'elle soit très satisfaisante, cette méthode ne permet toutefois pas d'empêcher qu'un choc subi par la peau du fuselage affecte des éléments de structure adjacents à la peau.

La présente invention vise à empêcher, ou en tout cas à limiter, l'impact du choc sur les pièces de structure adjacentes à la peau du fuselage.

À cet effet, l'invention a pour objet aéronef comprenant au moins une porte pour l'embarquement des passagers dans l'aéronef, l'aéronef comportant au moins un dispositif de liaison entre une pièce de structure interne d'un aéronef et une peau du fuselage de l'aéronef, le dispositif de liaison étant placé à proximité de la périphérie interne de la porte dans une zone sujette aux chocs extérieurs et comportant au moins une zone fragilisée en compression afin d'absorber des chocs subis par la face externe de la peau du fuselage, le dispositif étant par ailleurs configuré pour résister aux efforts de traction exercés sur la face interne de la peau du fuselage par la pression interne à l'aéronef.

Ainsi, en cas de choc extérieur subi par la peau du fuselage, la ou les zones fragilisées du dispositif servent de fusibles et se rompent afin d'éviter que les contraintes de compression externes exercées sur le fuselage ne se propagent jusqu'à la structure adjacente et ne l'endommagent.

Lorsqu'une pièce (ex : cadre) de la structure est endommagée, sa remise en état peut être lourde en termes de temps et de coût et nécessiter une immobilisation de l'aéronef. La présente invention permet de s'affranchir de cet inconvénient puisqu'il suffit de remplacer le ou les dispositifs de liaison qui ont été sacrifiés.

On notera que la zone est fragilisée en compression axiale suivant un axe sensiblement perpendiculaire à la peau du fuselage.

Selon une caractéristique, le dispositif comporte deux éléments dont au moins un comprend ladite au moins une zone fragilisée en compression.

Plus particulièrement, le dispositif comporte un premier élément comprenant ladite au moins une zone fragilisée en compression et un deuxième élément configuré pour résister aux efforts de traction.

Ainsi, les fonctions de tenue en compression affaiblie et de résistance en traction sont séparées et assurées chacune par un élément distinct.

Selon une caractéristique alternative, chacun des deux éléments du dispositif comprend ladite au moins une zone fragilisée en compression et est configuré pour résister aux efforts de traction.

Les deux fonctions sont ainsi assurées par chaque élément.

On notera que le dispositif peut comporter plus de deux éléments. Dans ce cas, la ou les zones à absorption d'énergie peuvent être sur l'un ou plusieurs des ces éléments.

Selon une caractéristique, le dispositif comporte un seul élément qui comprend ladite au moins une zone fragilisée en compression et est configuré pour résister aux efforts de traction.

Ce dispositif est donc plus simple à mettre en place qu'un dispositif à deux ou plus de deux éléments.

Afin de fragiliser la tenue en compression du ou des éléments constitutifs du dispositif, plusieurs trous ou perforations sont pratiqués dans le dispositif et, par exemple, dans un ou plusieurs éléments de celui-ci.

Cette suppression de matière est généralement opérée dans l'épaisseur du ou des éléments, l'épaisseur étant prise suivant une direction perpendiculaire à la direction axiale de compression.

Selon une caractéristique, le dispositif comporte un ou plusieurs stabilisateurs de la structure interne afin d'empêcher un mouvement de basculement de celle-ci.

Cette fonction de stabilisation a pour but de contrecarrer la tendance naturelle des éléments de structure interne (cadres, lisses...) à se coucher sous l'action d'ne sollicitation externe.

Plus particulièrement, le dispositif comporte une première partie d'extrémité fixée à la peau du fuselage, une deuxième partie d'extrémité fixée à la pièce de structure interne, et une troisième partie intermédiaire reliée aux deux autres et comprenant ladite au moins une zone fragilisée en compression axiale.

Ces parties peuvent se trouver sur chacun des deux éléments précités ou sur l'un d'entre eux seulement, que le dispositif comporte deux éléments ou un seul.

Lorsqu'il comporte deux éléments, les trois parties ne sont pas nécessairement sur les deux éléments.

Selon une caractéristique, la première partie d'extrémité s'étend dans une première direction parallèle à la face interne de la peau du fuselage et la deuxième partie d'extrémité s'étend dans une seconde direction perpendiculaire à la première direction.

Selon une autre caractéristique, la troisième partie intermédiaire peut s'étendre dans une direction sensiblement parallèle à la seconde direction ou dans plusieurs directions (lorsque cette troisième partie est formée de plusieurs portions) sensiblement parallèles à la seconde direction ou obliques par rapport à cette dernière.

On relèvera que la seconde direction correspond à la direction axiale suivant laquelle la ou les zones du dispositif sont conformées pour avoir une résistance en compression axiale intentionnellement réduite.

On notera par ailleurs que la tenue en traction du dispositif est généralement assurée par une épaisseur appropriée de la partie sollicitée du dispositif.

Le dispositif a ainsi une forme générale de cornière solidarisant des pièces d'une structure interne à la peau du fuselage de l'aéronef.

La forme de la cornière vue suivant son épaisseur est susceptible de varier en fonction des différents modes de réalisation et fonctionnalités attribuées à l'élément ou aux éléments constitutifs du dispositif.

On notera que le dispositif est plus particulièrement placé dans une zone bordant l'ouverture obturée par la porte et qui est susceptible de subir des chocs lors des mouvements d'approche des passerelles d'embarquement et de débarquement.

D'autres caractéristiques et avantages apparaitront au cours de la description qui va suivre, donnée uniquement à titre d'exemple non limitatif et faite en référence aux dessins annexés sur lesquels :
- la figure 1 est une vue schématique générale d'un aéronef ;
- la figure 2a est une vue schématique générale d'une porte pour passagers d'un aéronef ;
- la figure 2b est une vue schématique générale d'une porte cargo d'un aéronef ;
- la figure 3a est une vue schématique générale d'un mode de réalisation d'un dispositif selon l'invention ;
- la figure 3b est une vue de côté du dispositif de la figure 3a ;
- la figure 4a est une vue schématique générale d'un autre mode de réalisation d'un dispositif selon l'invention ;
- la figure 4b est une vue de côté du dispositif de la figure 4a ;
- la figure 5 est une vue schématique en perspective d'une variante de réalisation du dispositif des figures 3a et 3b ;
- la figure 6 est une vue schématique en perspective d'une variante de réalisation du dispositif des figures 4a et 4b ;
- les figures 7a, 7b et 7c sont des vues schématiques respectivement en section transversale, de côté et en perspective d'un autre mode de réalisation d'un dispositif selon l'invention.

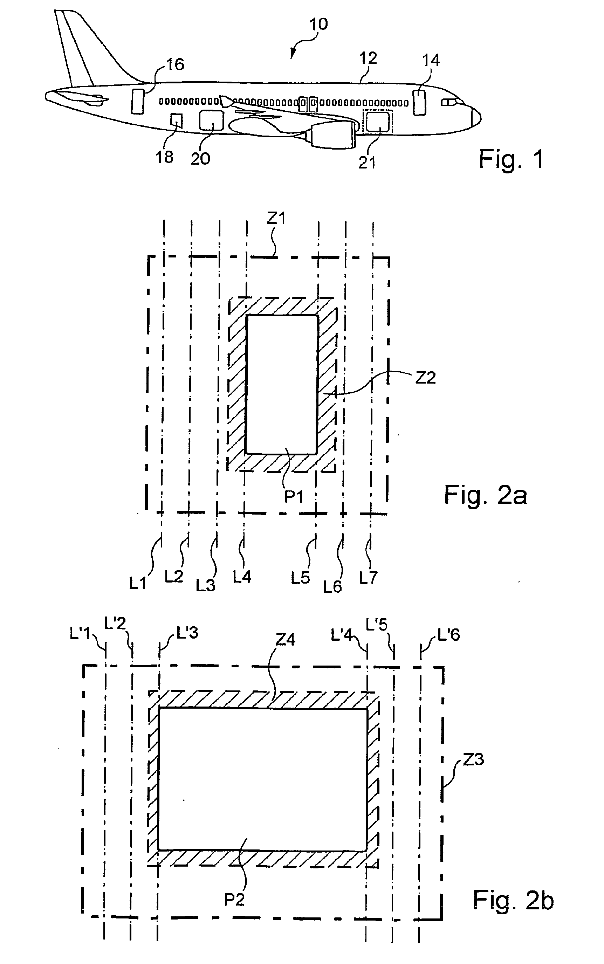

Comme représenté à la figure 1 et désigné par la référence générale notée 10, un aéronef comprend un fuselage 12 et plusieurs portes et panneaux d'accès à bord 14, 16, 18, 20, 21.

L'invention s'applique notamment aux portes d'aéronefs par lesquelles les passagers et le personnel de bord entrent et sortent de l'aéronef, ainsi qu'aux autres portes ou panneaux d'ouverture/fermeture (soutes palettisées, soutes à vrac...,) par lesquels des bagages, du fret, de la nourriture sont introduits à bord.

Ces portes et panneaux divers sont susceptibles d'être endommagés lorsque l'aéronef est au sol.

En effet, les équipements et installations aéroportuaires de chargement et déchargement des soutes et d'embarquement et débarquement des personnes peuvent heurter le fuselage de l'aéronef, lors des manoeuvres d'approche.

Les zones heurtées sont celles bordant les portes, panneaux, trappes... d'accès à bord.

Sur la figure 2a on a représenté une porte d'accès à bord P1 pour passagers et, en traits tiretés, une zone environnante Z1 qui est susceptible de recevoir des chocs de la part des équipements/installations au sol. Cette zone est dédiée à l'accostage des passerelles et est définie par la norme ISO-DIS 7718.

Dans la zone Z1, les traits mixtes verticaux L1, L2, L3, L4, L5, L6, L7 situés de part et d'autre de l'ouverture de la porte P1 (l'avant de l'avion est à gauche de la porte) représentent les positions le long desquelles sont disposés des cadres raidisseurs (pièces ou éléments de structure interne à l'avion et rigidifiant le fuselage).

Ces différentes positions sont espacées deux à deux d'un pas généralement compris entre 500 et 635 mm.

La zone Z1 a une hauteur généralement de l'ordre de 3500 mm et une longueur d'environ 4500 mm.

Une seconde zone Z2 bordant immédiatement la porte est renforcée de façon connue par des cadres directement fixés sur la peau du fuselage.

Le dispositif de liaison selon l'invention peut être fixé le long des positions L1 à L7 en dehors de la zone Z2, c'est-à-dire latéralement par rapport à cette zone, au dessus et en dessous de celle-ci. Plusieurs dispositifs sont par exemple agencés suivant la hauteur de la zone Z1, à distance généralement régulière les uns des autres.

Sur la figure 2b, on a représenté une porte/panneau d'accès de soute P2 (l'avant de l'avion est à droite de la porte) et, en traits tiretés, une zone Z3 entourant cette porte et qui est susceptible de recevoir des chocs de la part des équipements/installations aéroportuaires. La zone Z3 est dédiée à l'accostage des transbordeurs de palettes.

La porte P2 correspond par exemple à la porte 21 de la figure 1.

Dans la zone Z3, les traits mixtes verticaux L'1, L'2, L'3, L'4, L'5, L'6 situés de part et d'autre de l'ouverture de la porte P2 représentent les positions le long desquelles sont disposés des cadres raidisseurs.

Une seconde zone Z4 située à la périphérie immédiate de la porte (comme la zone Z2 de la figure 2a) est renforcée par des cadres directement fixés sur la peau du fuselage.

Le dispositif selon l'invention peut, là aussi, être agencé le long des positions L'1 à L'6 en dehors de la zone périphérique Z4.

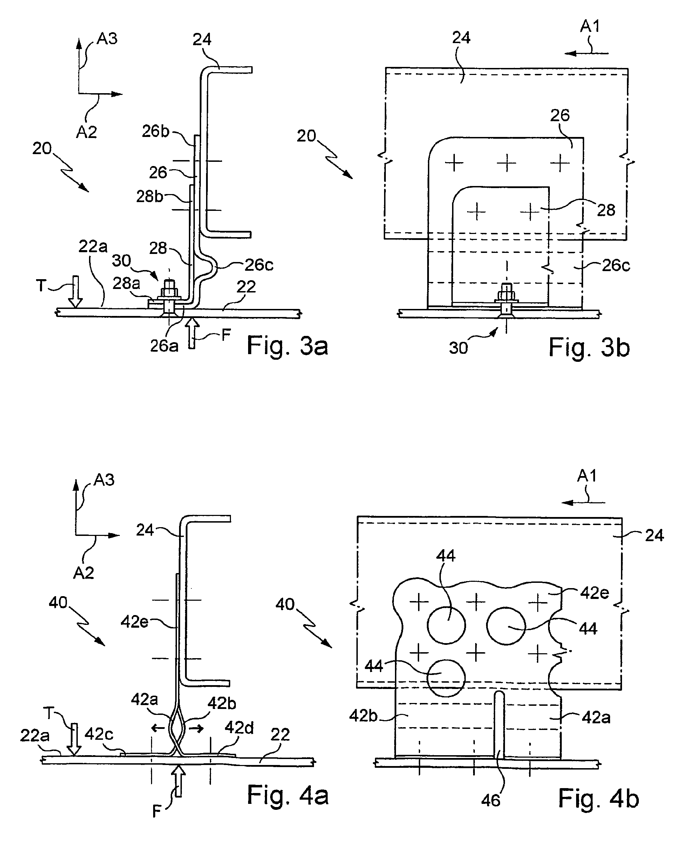

Le dispositif ou clip 20 illustré schématiquement sur les figures 3a et 3b est par exemple implanté dans les zones d'accostage non renforcées représentées aux figures 2a et 2b.

Ce dispositif relie des pièces de renforcement d'une structure interne de l'aéronef à la peau ou paroi 22 du fuselage.

En particulier, la pièce de renforcement des figures 3a et 3b, est un cadre 24 faisant office de raidisseur transversal et dont on aperçoit seulement la forme de C ouvert en section transversale (figure 3a). Le corps du cadre s'étend longitudinalement suivant la direction A1 (figure 3b).

Dans le repère de ces figures 1 et 2, la direction A1 correspond à la verticale.

Le dispositif 20 comprend deux éléments distincts 26 et 28 accolés ayant chacun une forme générale d'équerre ou de L inversé en section transversale pour pouvoir être facilement fixés, d'une part, au cadre 24 et à la paroi 22 et, d'autre part l'un à l'autre.

Chaque élément 26, 28 comprend ainsi une première partie d'extrémité 26a, 28a qui s'étend dans une direction A2 parallèle à la face interne 22a de la peau de fuselage 22 pour être fixée à celle-ci.

Plus particulièrement, la première partie 26a du premier élément 26 est en contact par sa face externe avec la face interne 22a, tandis que la première partie 28a du second élément 28 est positionnée contre la face interne de la première partie 26a.

Un moyen de fixation conventionnel 30, par exemple de type vis-écrou, assemble les deux éléments à la peau 22.

On notera que la peau du fuselage peut être en matériaux composites (carbone...) ou métallique.

Chaque élément 26, 28 comprend également une deuxième partie 26b, 28b qui s'étend globalement dans une direction A3, perpendiculaire à la direction A2, afin de pouvoir être fixée au corps du cadre 24, notamment sur sa grande face externe longitudinale.

Plus particulièrement, la deuxième partie 26b de l'élément 26 est en contact par sa face externe avec la face extérieure longitudinale du cadre 24 et est fixée à celle-ci, par exemple, par des fixations mécaniques telles que boulons, rivets ou par collage.

La deuxième partie 28b de l'élément 28 est en contact par une portion dite d'extrémité de sa face externe avec la face interne de la deuxième partie 26b et y est fixée, par exemple, par des fixations mécaniques telles que boulons, rivets ou par collage.

Le premier élément 26 comporte également une troisième partie intermédiaire comprenant une zone 26c fragilisée en compression. Cette zone se présente sous la forme d'un pli ou ondulation s'étendant dans la direction A3, perpendiculairement par rapport à la direction axiale de compression (direction A2).

Ce pli 26c s'étend longitudinalement (suivant la direction A1) sur une grande partie de la longueur de l'élément 26, voire sur sa totalité (figure 3b).

En raison de cette forme pré-flambée qui offre peu de résistance à une sollicitation extérieure en compression axiale (illustrée par la flèche référencée F), le premier élément 26 va s'effondrer et se rompre sous l'action d'un tel effort (choc), exerçant ainsi un rôle de fusible ou d'absorbeur d'énergie.

Le second élément 28 est, quant à lui, configuré pour résister aux efforts de traction induits par la pression régnant à l'intérieur de la cabine (illustrés par la flèche référencée T). Pour ce faire, ses dimensions (longueur, épaisseur) sont adaptées.

On notera que, dans cet exemple de réalisation, le second élément 28 est également fragilisé en compression de par sa faible épaisseur (dimension prise suivant une section transversale).

Cependant, l'épaisseur du second élément est adaptée afin de ne pas offrir une résistance en compression supérieure à celle du premier élément.

Ainsi, en cas de choc axial sur la peau 22 (flèche F), l'élément 28 en forme de cornière droite va se rompre d'abord, tandis que l'élément 26 en forme de cornière ondulée va absorber l'énergie du choc en se déformant afin de protéger la structure interne 24 adjacente à la paroi et liée à celle-ci.

On notera qu'il est utile de savoir que le clip de liaison (dispositif 20) a rempli sa fonction de protection et s'est rompu.

Pour ce faire, un organe de détection du type « fil à casser » ou jauge de contrainte est intégré dans le clip ou fixé à ce dernier. Cet organe est associé à l'un et/ou à l'autre des éléments constitutifs du clip et est soumis à la déformation à laquelle sont soumis ces éléments.

L'organe va ainsi se déformer jusqu'à sa rupture (obtenue pour la déformation maximale subie par le clip), ce qui va déclencher l'envoi d'un signal à un calculateur de maintenance (système informatique de surveillance de l'aéronef) embarqué à bord de l'aéronef. Le document FR 2 666 895 décrit une méthode de détection de choc utilisable dans l'exemple mentionné ci-dessus.

Par ailleurs, les deux éléments ou pièces du dispositif 20 sont, par exemple, réalisés en matériaux composites.

Alternativement, ils pourraient être réalisés en matériaux métalliques tels que des alliages métalliques légers protégés de la corrosion galvanique par un revêtement approprié.

À titre d'exemple, ces éléments sont en titane et l'épaisseur de chacun d'eux est déterminée en fonction des efforts auxquels sont soumis ces éléments lors de leur mise en service (efforts courants et efforts conduisant à une déformation).

On notera que le premier élément peut être fragilisé par d'autres moyens tels que des perforations pratiquées dans l'épaisseur de l'élément.

Le premier élément pourrait aussi être réalisé en deux portions formant l'une avec l'autre un angle d'inclinaison et la zone de raccord entre les deux portions pourrait être amincie pour offrir une résistance moindre aux compressions axiales.

A titre d'exemple, le cadre 24 a une hauteur d'environ 85mm et la longueur du dispositif 20 dans la direction longitudinale A1 est par exemple de 150mm.

Le dispositif 40 illustré schématiquement sur les figures 4a et 4b maintient en position un élément de structure (cadre 24) associé de façon adjacente à la peau du fuselage 22 grâce à un seul élément de liaison.

L'élément de liaison unique assure à la fois une fonction de résistance mécanique aux efforts de traction qui est adaptée pour résister aux efforts courants et une fonction de résistance mécanique faible en compression axiale.

Cet élément a une forme générale de T renversé en section transversale (plan de la figure 4a) et s'étend longitudinalement suivant la direction A1 (figure 4b).

L'élément 40 peut être vu comme l'association de deux sous-éléments en forme de cornières ondulées inversées, disposés l'un derrière l'autre suivant la direction A1, l'un ayant une forme générale de L et l'autre une forme générale de L inversé.

Chaque sous-élément dont la forme générale est proche de celle de l'élément 26 des figures 3a et 3b possède une partie médiane arquée ou incurvée (partie intermédiaire) afin de présenter une caractéristique de pré-flambement vis-à-vis d'une sollicitation axiale externe (F). Les deux parties médianes arquées 42a et 42b présentent des concavités inverses l'une de l'autre et sont prolongées respectivement par des parties planes formant des semelles 42c et 42d (parties d'extrémité) fixées à la face interne 22a de la peau 22 par des fixations mécaniques (rivets ou boulons) ou par collage.

Chaque ensemble constitué d'une partie médiane arquée et d'une semelle forme une jambe.

Ces sous-éléments sont réunis à leur partie supérieure 42e (figure 4b) afin de ne former qu'une seule pièce.

La partie supérieure forme en quelque sorte un corps ou tronc commun auquel sont rattachés les jambes.

La partie supérieure 42e (partie d'extrémité) est fixée à la face longitudinale externe du cadre 24 par des organes de fixation tels que des fixations mécaniques (rivets ou boulons) ou par collage.

Cette partie supérieure présente de façon optionnelle des trous ou perforations 44 dans son épaisseur afin de fragiliser sa résistance en compression axiale.

Le contour de la partie supérieure allégée 42e comporte éventuellement des ondulations ou festonnages afin de réduire un peu la masse de la pièce et donc le poids embarqué.

Par ailleurs, une fente 46 alignée suivant la direction A3 est prévue entre les deux jambes arquées 42a et 42c, d'une part et 42b, 42d, d'autre part, afin de réduire davantage la tenue en compression du dispositif 40 et de lui conférer une souplesse/élasticité supplémentaire.

Ainsi, le dispositif de liaison 40 est fragilisé en compression grâce aux portions arquées 42a, 42b de ses deux jambes et aux éventuels trous 44 afin d'absorber l'énergie d'un choc axial et donc de protéger le cadre 24.

Dans ce mode de réalisation, la résistance du dispositif 40 aux efforts de traction T est procurée par son épaisseur qui est supérieure à celle de l'élément 28 (cornière droite) de la figure 3a.

On cherche donc à réduire le poids du dispositif par les trous d'allègement et les festonnages périphériques pour compenser une surépaisseur.

On notera que le dispositif peut comporter plus de deux jambes consécutives arquées alternativement vers l'avant et vers l'arrière, séparées l'une de l'autre par une fente et assujetties au corps 42e.

Dans ce mode de réalisation, un ou plusieurs organes de détection de rupture du type de ceux décrits en relation avec les figures 3a, 3b peuvent être associés au dispositif 40.

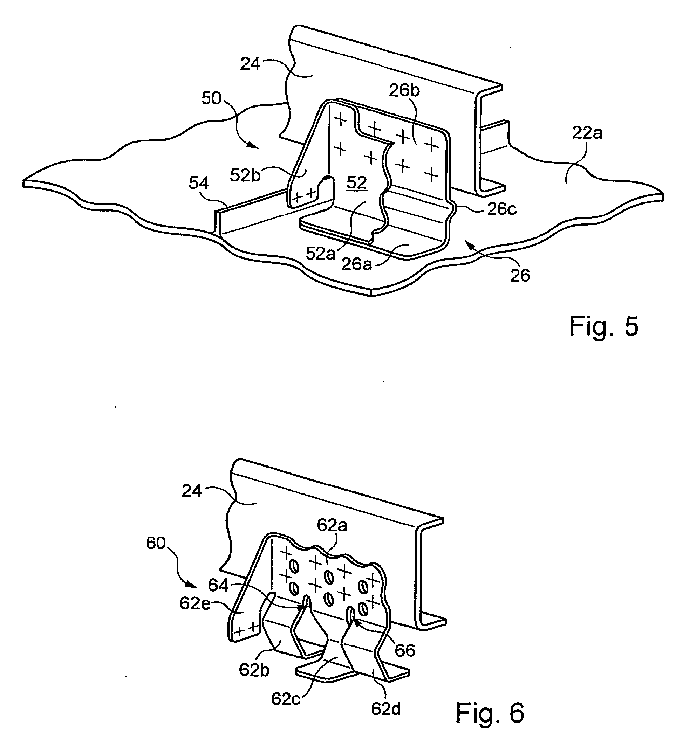

La figure 5 illustre une variante de réalisation du dispositif 20 des figures 3a et 3b.

Dans cette variante, le premier élément fragilisé en compression du dispositif de liaison 50 est identique au premier élément 26 (en forme de cornière ondulée) et conserve la même référence.

Le deuxième élément 52 du dispositif 50 intègre une fonctionnalité supplémentaire de celle (tenue en traction) assurée par le deuxième élément 28 du dispositif 20.

Ce deuxième élément 52 comporte une partie 52a quasi-identique au deuxième élément 28 (en forme de cornière droite) et qui vient se superposer à la grande face interne du premier élément 26.

Le deuxième élément 52 comporte également une partie de stabilisation 52b qui s'étend perpendiculairement à la grande face de la partie 52a et donc perpendiculairement au cadre 24 (dans une section transversale). Cette extension transversale a pour effet de s'opposer au basculement (déversement) transversal du cadre 24 en direction de la peau 22, lorsque ce dernier est soumis à des sollicitations courantes.

On notera que cette extension est réalisée sous la forme d'un retour du deuxième élément (obtenu par pliage) qui s'étend depuis la partie haute du deuxième élément jusqu'à sa partie basse en contact avec une lisse 54 solidaire de la paroi 22.

Le stabilisateur ainsi constitué réalise un contreventement du cadre en le reliant à une lisse au moyen de fixations mécaniques (boulons ou rivets).

Le stabilisateur a une forme générale triangulaire ou trapézoïdale et se fixe sur la lisse par au moins deux fixations.

La figure 6 illustre une variante de réalisation du dispositif 40 des figures 4a et 4b intégrant un stabilisateur de structure analogue à celui représenté sur la figure 5.

Dans cette variante, le dispositif de liaison 60 comporte un corps 62a fixé au cadre 24 et éventuellement percé d'ouvertures comme le corps 42e de la figure 4b.

Trois jambes arquées 62b, 62c et 62d sont rattachées au corps 62a, alternant successivement une concavité tantôt orientée vers l'avant tantôt vers l'arrière, comme les jambes arquées des figures 4a, 4b.

Les trois jambes 62b, 62c et 62d sont espacées longitudinalement deux à deux par une fente respective 64, 66.

La fonction de stabilisation est assurée par un retour perpendiculaire 62e analogue au retour du stabilisateur 52b de la figure 5.

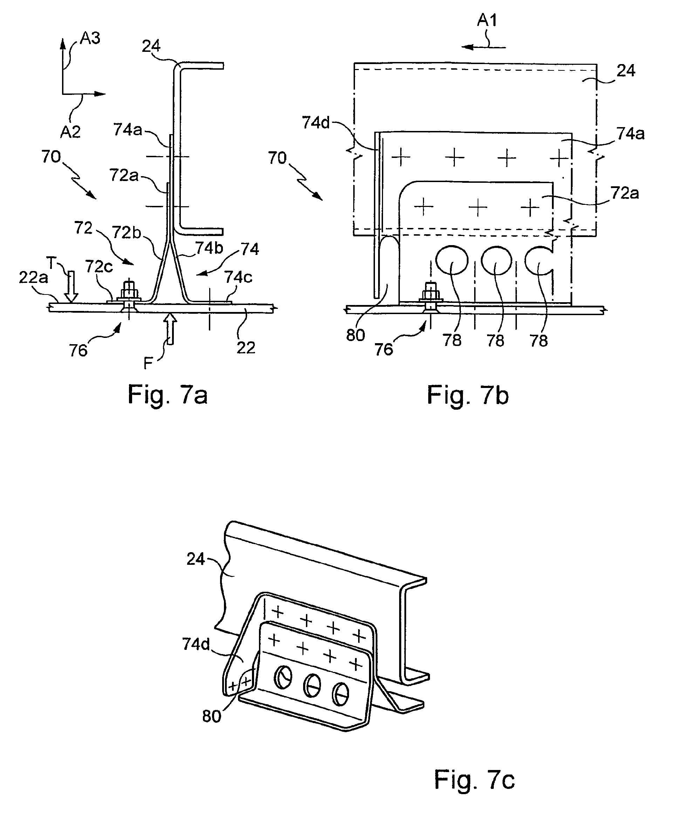

Le dispositif 70 représenté aux figures 7a, 7b et 7c illustre un troisième mode de réalisation de l'invention. Ce dispositif est formé de deux éléments 72, 74 en appui l'un sur l'autre, fixés à la structure interne 24 de l'aéronef, d'une part, et à la paroi 22, d'autre part.

Chaque élément 72, 74 comprend une partie 72a, 74a qui s'étend dans un plan formé par les directions A1 et A3, afin de pouvoir être fixée au corps du cadre 24, notamment sur sa grande face externe longitudinale.

Les deux parties respectives 72a, 74a forment le corps de l'élément concerné et sont fixées l'une à l'autre, par exemple, par boulonnage ou rivetage. La partie 74a est, quant à elle, fixée directement à l'élément de structure 24.

Chaque élément 72, 74 comprend également une partie médiane 72b, 74b inclinée par rapport au plan formé par les directions A1 et A3 et qui s'étend respectivement, à partir de la partie 72a, 74a, en direction de la paroi 22 du fuselage.

Une partie plane formant semelle 72c, 74c s'étend à partir de la partie inclinée 72b, 74b parallèlement à la peau 22 et est en contact avec celle-ci pour y être fixée au moyen d'organes de fixation tels que l'organe 76 (similaire à l'organe 30 de la figure 3a).

Les parties médianes 72b, 74b constituent les âmes du clip 70, tout comme les parties arquées 42a, 42b du clip 40. Cependant, elles sont plus stables en traction que ces dernières car elles peuvent être tendues par des efforts obliques symétriques par rapport au plan médian situé entre les parties 72b et 74b.

Les parties médianes 72b, 74b qui s'étendent de façon oblique par rapport à la direction axiale de compression (F) sont fragilisées en compression par la présence de plusieurs trous d'allègement 78.

Ces trous pratiqués dans l'épaisseur des éléments 72, 74 sont sensiblement alignés suivant la direction longitudinale A1.

On notera que la réalisation de trous en vue de réduire la résistance à la compression du dispositif de liaison selon l'invention (figures 4b, 6 et 7b) est un moyen particulièrement simple à mettre en oeuvre.

D'autres moyens d'enlèvement de matière peuvent être envisagés, par exemple, en pratiquant des découpes appropriées dans le ou les éléments constitutifs du dispositif.

Ainsi, chaque élément 72, 74 est à la fois configuré pour présenter une résistance suffisante aux efforts de traction (par son épaisseur) et une fragilisation vis-à-vis d'efforts de compression axiaux (suivant F).

On notera que l'élément 72 est, tout comme l'élément 28 des figures 3a et 3b, de dimensions réduites par rapport à celles de l'élément 74, ceci afin de minimiser le recouvrement des âmes des pièces 24, 74, 72 et ainsi de réduire la masse. La pièce 74a peut nécessiter, comme sur l'exemple, plusieurs lignes de fixations selon le flux d'effort passant.

Par ailleurs, l'épaisseur de l'élément 72 est inférieure ou égale à celle de l'élément 74 car la pièce 74 liée par davantage de fixations, aura à transmettre davantage d'effort.

Comme représenté sur les figures 7b et 7c, un retour 74d formé par pliage à angle droit à partir de l'élément 74 s'étend transversalement suivant les directions A2 et A3. Ce retour a pour fonction de stabiliser le cadre 24 en cas de basculement vers la gauche et en direction de la peau 22 (figure 7a).

Ce retour a une forme et une fonction analogues à celles des retours des figures 5 et 6.

Une découpe 80 est en outre prévue entre l'élément 72 et le stabilisateur 74d afin de permettre le pliage dans deux directions (pliage du stabilisateur et pliage de l'élément 74) et d'éviter le congé du pied de lisse adjacent.

Il convient de noter que le dispositif/clip de liaison selon l'invention peut revêtir différentes formes non représentées ici dans la mesure où chacune de ces formes offre une fragilisation intentionnelle en compression et une tenue mécanique suffisante en traction.

Le dispositif selon l'invention peut être utilisé dans des zones de l'aéronef où des chocs provenant de l'extérieur sont susceptibles d'endommager la paroi de l'aéronef ainsi que des éléments internes installés de façon adjacente à cette paroi.

## Revendications

1. Aéronef comprenant au moins une porte (14, 16, P1) pour l'embarquement des passagers dans l'aéronef, l'aéronef comportant au moins un dispositif de liaison (20 ;40 ;50 ;60 ;70) entre une pièce (24) de structure interne d'un aéronef et une peau du fuselage (22) de l'aéronef, le dispositif de liaison étant placé à proximité de la périphérie interne de la porte dans une zone (Z1) sujette aux chocs extérieurs, le dispositif étant par ailleurs configuré pour résister aux efforts de traction exercés sur la face interne de la peau du fuselage par la pression interne à l'aéronef, **caractérisé en ce que** le dispositif comporte au moins une zone fragilisée en compression (26c ; 42a ; 42b ; 62b ; 62c ; 62d ; 72b ; 74b) afin d'absorber des chocs subis par la face externe de la peau du fuselage.

2. Aéronef selon la revendication 1, **caractérisé en ce que** le dispositif comporte deux éléments (26, 28 ; 72, 74) dont au moins un comprend ladite au moins une zone fragilisée en compression.

3. Aéronef selon la revendication 2, **caractérisé en ce que** le dispositif comporte un premier élément (26) comprenant ladite au moins une zone fragilisée en compression (26c) et un deuxième élément (28) configuré pour résister aux efforts de traction.

4. Aéronef selon la revendication 2, **caractérisé en ce que** le dispositif comporte deux éléments (72, 74) qui chacun comprennent ladite au moins une zone fragilisée en compression (72b, 74b) et sont configurés pour résister aux efforts de traction.

5. Aéronef selon la revendication 1, **caractérisé en ce que** le dispositif comporte un seul élément (40 ; 60) qui comprend ladite au moins une zone fragilisée en compression et est configuré pour résister aux efforts de traction.

6. Aéronef selon l'une des revendications 1 à 5, **caractérisé en ce que** des trous d'allègement (44 ; 78) sont pratiqués dans le dispositif afin de fragiliser sa tenue en compression.

7. Aéronef selon l'une des revendications 1 à 6, **caractérisé en ce que** le dispositif comporte au moins un stabilisateur (52b ; 62e ; 74d) de la structure interne afin d'empêcher un mouvement de basculement de celle-ci.

8. Aéronef selon l'une des revendications 1 à 7, **caractérisé en ce que** le dispositif comporte une première partie d'extrémité fixée à la peau de fuselage (22), une deuxième partie d'extrémité fixée à la pièce (24) de structure interne et une troisième partie reliée aux deux autres et comportant ladite au moins une zone fragilisée en compression axiale (26c ; 42a ; 42b ; 62b ; 62c ; 62d ; 72b ; 74b).

9. Aéronef selon la revendication 8, **caractérisé en ce que** la première partie d'extrémité s'étend dans une première direction parallèle à la face interne de la peau du fuselage et la deuxième partie d'extrémité s'étend dans une seconde direction perpendiculaire à la première direction.

10. Aéronef selon la revendication 9, **caractérisé en ce que** la troisième partie s'étend dans une direction sensiblement parallèle à la seconde direction.

11. Aéronef selon la revendication 9 ou 10, **caractérisé en ce que** la seconde direction correspond à la direction axiale suivant laquelle ladite au moins une zone du dispositif est conformée pour avoir une résistance en compression axiale réduite.

12. Aéronef selon l'une des revendications 1 à 11, **caractérisé en ce que** le dispositif a une forme générale de cornière solidarisant la pièce de structure interne de l'aéronef à la peau du fuselage.

## Claims

1. An aircraft comprising at least one door (14, 16, P1) for the boarding of passengers into the aircraft, the aircraft comprising at least one connection device (20; 40; 50; 60; 70) between an internal structural part (24) of an aircraft and a skin of the fuselage (22) of the aircraft, the connection device being positioned near the internal periphery of the door in a zone (Z1) subject to external shocks, the device furthermore being configured to withstand the tensile forces exerted on the inner face of the skin of the fuselage by the internal pressure of the aircraft, **characterized in that** the device comprises at least one zone weakened under compression (26c; 42a; 42b; 62b; 62c; 62d; 72b; 74b) in order to absorb shocks experienced by the outer face of the skin of the fuselage.

2. An aircraft according to claim 1, **characterized in that** the device comprises two members (26, 28; 72, 74) at least one of which comprises said at least one zone weakened under compression.

3. An aircraft according to claim 2, **characterized in that** the device comprises a first member (26) comprising said at least one zone weakened under compression (26c) and a second member (28) configured to withstand tensile forces.

4. An aircraft according to claim 2, **characterized in that** the device comprises two members (72, 74) which each comprise the said at least one zone weakened under compression (72b, 74b) and are configured to withstand tensile forces.

5. An aircraft according to claim 1, **characterized in that** the device comprises a single member (40; 60) which comprises said at least one zone weakened under compression and is configured to withstand tensile forces.

6. An aircraft according to one of claims 1 to 5, **characterized in that** lightening holes (44; 78) are formed in the device so as to weaken its compressive strength.

7. An aircraft according to one of claims 1 to 6, **characterized in that** the device comprises at least one stabilizer (52b; 62e; 74d) of the internal structure so as to prevent a swaying movement thereof.

8. An aircraft according to one of claims 1 to 7, **characterized in that** the device comprises a first end part fastened to the fuselage skin (22), a second end part fastened to the internal structural part (24) and a third part connected to the other two and comprising the said at least one zone weakened under axial compression (26c; 42a; 42b; 62b; 62c; 62d; 72b; 74b).

9. An aircraft according to claim 8, **characterized in that** the first end part extends in a first direction parallel to the inner face of the skin of the fuselage and the second end part extends in a second direction perpendicular to the first direction.

10. An aircraft according to claim 9, **characterized in that** the third part extends in a direction substantially parallel to the second direction.

11. An aircraft according to claim 9 or 10, **characterized in that** the second direction corresponds to the axial direction along which said at least one zone of the device is formed in order to have a reduced strength under axial compression.

12. An aircraft according to one of claims 1 to 11, **characterized in that** the device has a general shape of an angle-iron joining the internal structural part of the aircraft with the skin of the fuselage.

## Patentansprüche

1. Luftfahrzeug mit zumindest einer Tür (14, 16, P1) für den Zustieg von Passagieren in das Luftfahrzeug, wobei das Luftfahrzeug zumindest eine Verbindungsvorrichtung (20; 40; 50; 60; 70) zwischen einem Stück (24) der internen Struktur des Luftfahrzeugs und einer Rumpfhaut (22) des Luftfahrzeugs umfasst, wobei die Verbindungsvorrichtung in der Nähe des Innenumfangs der Tür in einer Zone (Z1) platziert ist, die äußeren Stößen ausgesetzt ist, wobei die Vorrichtung darüber hinaus ausgestaltet ist, um den Zugbeanspruchungen standzuhalten, die auf die Innenfläche der Rumpfhaut durch den Innendruck des Luftfahrzeugs ausgeübt werden,
**dadurch gekennzeichnet, dass**
die Vorrichtung zumindest eine gegen Druck geschwächte Zone (26c; 42a; 42b; 62b; 62c; 62d; 72b; 74b) umfasst, um Stöße zu absorbieren, die durch die Außenfläche der Rumpfhaut erfahren werden.

2. Luftfahrzeug nach Anspruch 1,
**dadurch gekennzeichnet, dass** die Vorrichtung zwei Elemente (26, 28; 72, 74) umfasst, von denen zumindest eines die zumindest eine gegen Druck geschwächte Zone umfasst.

3. Luftfahrzeug nach Anspruch 2,
**dadurch gekennzeichnet, dass** die Vorrichtung ein erstes Element (26), das die zumindest eine gegen Druck geschwächte Zone (26c) umfasst, und ein zweites Element (28) umfasst, das ausgestaltet ist, um den Zugbeanspruchungen standzuhalten.

4. Luftfahrzeug nach Anspruch 2,
**dadurch gekennzeichnet, dass** die Vorrichtung zwei Elemente (72, 74) umfasst, die jeweils die zumindest eine gegen Druck geschwächte Zone (72b, 74b) umfassen und ausgestaltet sind, um den Zugbeanspruchungen standzuhalten.

5. Luftfahrzeug nach Anspruch 1,
**dadurch gekennzeichnet, dass** die Vorrichtung ein einziges Element (40; 60) umfasst, das die zumindest eine gegen Druck geschwächte Zone umfasst und ausgestaltet ist, um den Zugbeanspruchungen standzuhalten.

6. Luftfahrzeug nach einem der Ansprüche 1 bis 5,
**dadurch gekennzeichnet, dass** Erleichterungslöcher (44; 78) in die Vorrichtung eingearbeitet sind, um ihre Widerstandsfähigkeit gegen Druck zu schwächen.

7. Luftfahrzeug nach einem der Ansprüche 1 bis 6,
**dadurch gekennzeichnet, dass** die Vorrichtung zumindest einen Stabilisator (52b; 62e; 74d) für die interne Struktur umfasst, um eine Kippbewegung derselben zu verhindern.

8. Luftfahrzeug nach einem der Ansprüche 1 bis 7,
**dadurch gekennzeichnet, dass** die Vorrichtung einen ersten Endteil, der an der Rumpfhaut (22) befestigt ist, einen zweiten Endteil, der an dem Stück (24) der internen Struktur befestigt ist, und einen dritten Teil umfasst, der mit den zwei anderen verbunden ist und die zumindest eine gegen axialen Druck geschwächte Zone (26c; 42a; 42b; 62b; 62c; 62d; 72b; 74b) umfasst.

9. Luftfahrzeug nach Anspruch 8,
**dadurch gekennzeichnet, dass** der erste Endteil sich in einer ersten Richtung parallel zu der Innenfläche der Rumpfhaut erstreckt, und der zweite Endteil sich in einer zweiten Richtung senkrecht zu der ersten Richtung erstreckt.

10. Luftfahrzeug nach Anspruch 9,
**dadurch gekennzeichnet, dass** sich der dritte Teil in einer Richtung im Wesentlichen parallel zu der zweiten Richtung erstreckt.

11. Luftfahrzeug nach Anspruch 9 oder 10,
**dadurch gekennzeichnet, dass** die zweite Richtung einer axialen Richtung entspricht, in welcher die zumindest eine Zone der Vorrichtung für einen axial verringerten Druckwiderstand angepasst ist.

12. Luftfahrzeug nach einem der Ansprüche 1 bis 11,
**dadurch gekennzeichnet, dass** die Vorrichtung eine im Allgemeinen winklige Form aufweist, die das Stück der internen Struktur des Luftfahrzeugs mit der Rumpfhaut vereint.
